# EUROPEAN PATENT APPLICATION

(11) **EP 4 563 677 A1**
(43) Date of publication of application: **04.06.2025**
(21) Application number: 24817030.0
(22) Date of filing: 12.04.2024
(51) Int. Cl.: C10L 1/32

(54) **BIOMASS-CONTAINING FUEL**

(30) Priority: 04.10.2023 JP 2023173000
(71) Applicant: Solariant Capital Co., Ltd., Minato-ku, Tokyo 1066137 (JP); Nippon Shokubai Co., Ltd., Osaka-shi, Osaka 541-0043 (JP)
(72) Inventor: KONO, Katsuyuki, Suita-shi Osaka 5640034 (JP); TOKUDA, Shinichi, Tokyo 1066137 (JP); TSURUI, Masao, Tokyo 1066137 (JP)
(74) Representative: Cabinet Beau de Loménie
(86) International application number: PCT/JP2024/014772
(87) International publication number: WO 2025/074672

(57) **Abstract**

The present invention aims to provide a biomass-containing fuel that has a high biomass content and excellent fluidity. The present invention relates to a biomass-containing fuel containing a char produced by pyrolysis of plant biomass; a dispersant; and water. The char produced by pyrolysis of plant biomass is contained in a proportion of 40% by mass or more based on 100% by mass of the biomass-containing fuel.

## Description

### TECHNICAL FIELD

The present invention relates to biomass-containing fuels. Specifically, the present invention relates to a biomass-containing fuel that is suitable for use as fuels for diesel engines, boilers, gas turbines, etc., and as sustainable aviation fuels.

### BACKGROUND ART

Slurry fuels, which are made by adding liquid such as water to powdered solid fuels such as coal, have been developed as alternatives to liquid fuels such as heavy oil.

Regarding coal slurry fuels, for example, Patent Literature 1 discloses a coal-water slurry containing low-grade coal and high-grade coal as coal, where the average particle size of particles of the high-grade coal is greater than the average particle size of particles of the low-grade coal.

The increase in carbon dioxide emissions due to the mass consumption of fossil fuels is a major factor in global warming, and there is a demand to reduce carbon dioxide emissions.

Plant biomass such as wood emits carbon dioxide when combusted. This carbon dioxide is equivalent to the carbon dioxide that has been absorbed by plants during the plants' growth process and does not affect the increase or decrease of carbon dioxide in the atmosphere. Therefore, it is hoped that plant biomass will be used as fuels to realize a decarbonized society.

Patent Literature 2 discloses a method of producing a biomass water slurry, including: an upgrading step for performing upgrading treatment of a cellulose based biomass raw material in the presence of water and under a pressure of at least saturated water vapor pressure; a separation step for separating the upgraded reaction product obtained from the upgrading step into a solid component and a liquid component; a crushing step for crushing the solid component obtained from the separation step to an average particle size of 30 µm or less using a crushing device; and a mixing step for adding additives and optional water to the solid component and mixing these, wherein the crushing step and the mixing step are performed either simultaneously or sequentially in this order.

### CITATION LIST

### - Patent Literature

Patent Literature 1: JP 2000-290673 A
Patent Literature 2: JP 2003-129069 A

### SUMMARY OF INVENTION

### - Technical Problem

As described above, fuels prepared by using plant biomass have been developed, but there is a demand for further development of biomass-containing fuels that have a high biomass content to increase the calorific value and also have excellent fluidity from the standpoint of handleability, etc.

The present invention has been made in consideration of the above-described current situation, and aims to provide a biomass-containing fuel that has a high biomass content and excellent fluidity.

### - Solution to Problem

The present inventors have studied various biomass-containing fuels and found that use of a char produced by pyrolysis of plant biomass can provide a biomass-containing fuel having excellent fluidity even though it has an increased biomass content as high as 40% by mass or more. The finding leads to a solution of the above-described problem, and the present inventors have now completed the present invention.

The present invention encompasses the following biomass-containing fuels, etc.
(1) A biomass-containing fuel containing:
   char produced by pyrolysis of plant biomass;
   a dispersant; and
   water,
   the char produced by pyrolysis of plant biomass being contained in a proportion of 40% by mass or more based on 100% by mass of the biomass-containing fuel.
(2) The biomass-containing fuel according to (1),
   wherein the char produced by pyrolysis of plant biomass is obtained by pyrolysis at a temperature of 250°C to 450°C.
(3) The biomass-containing fuel according to (1) or (2),
   wherein the char produced by pyrolysis of plant biomass includes particles, with 95% or more of the particles having a particle size of 50 µm or less.
(4) The biomass-containing fuel according to any one of (1) to (3),
   wherein the char produced by pyrolysis of plant biomass has an average particle size of 0.1 µm or more and 20 µm or less.
(5) The biomass-containing fuel according to any one of (1) to (4),
   wherein the biomass-containing fuel has a viscosity of 1,000 mPa·s or less.
(6) A method for producing a biomass-containing fuel, the method including:
   carbonizing plant biomass by pyrolysis to produce a char;
   pulverizing the char obtained in the carbonizing; and
   mixing the pulverized material obtained in the pulverizing, a dispersant, and water.

### - Advantageous Effects of Invention

The biomass-containing fuel of the present invention having the above-described structure has a high biomass content and excellent fluidity, and can therefore be suitable for use as fuels for diesel engines, boilers, gas turbines, etc., or as sustainable aviation fuels. In particular, the biomass-containing fuel of the present invention can be suitable for use as fuels for boilers, gas turbines, etc.

### DESCRIPTION OF EMBODIMENTS

Preferred embodiments of the present invention are described in detail below, but the present invention is not limited to the following description. The present invention can be modified and applied as appropriate within the scope that does not change the gist of the present invention. Any combination of two or more of the following preferred embodiments of the present invention is also a preferred embodiment of the present invention.

### (Biomass-containing fuel)

The biomass-containing fuel of the present invention contains a char produced by pyrolysis of plant biomass, a dispersant, and water. The char produced by pyrolysis of plant biomass is contained in a proportion of 40% by mass or more based on 100% by mass of the biomass-containing fuel.

The biomass-containing fuel containing a char produced by pyrolysis of plant biomass has better fluidity. In addition, the biomass-containing fuel containing a char produced by pyrolysis of plant biomass in a proportion of 40% by mass or more has excellent combustion characteristics.

The proportion of the char produced by pyrolysis of plant biomass in the biomass-containing fuel is preferably 40 to 70% by mass, more preferably 43 to 65% by mass, still more preferably 45 to 65% by mass, further more preferably 50 to 65% by mass, particularly preferably 50 to 60% by mass.

The proportion of the dispersant in the biomass-containing fuel is preferably, but not limited to, 0.01 to 10% by mass based on 100% by mass of the char produced by pyrolysis of plant biomass. The proportion is more preferably 0.1 to 5% by mass, still more preferably 0.5 to 3% by mass, further more preferably 1 to 2.5% by mass, particularly preferably 1.5 to 2% by mass.

The water in the biomass-containing fuel evaporates and expands in volume when the fuel is burned, so that the water also serves as a power energy source for driving the internal combustion engine. Depending on the application of the fuel, the water content can be determined in consideration of the balance with calorific value derived from the char. The water content is preferably, but not limited to, 30 to 60% by mass based on 100% by mass of the biomass-containing fuel. The water content is more preferably 35 to 57% by mass, still more preferably 35 to 55% by mass, further more preferably 35 to 50% by mass, particularly preferably 40 to 50% by mass.

The water contained in the biomass-containing fuel may be water produced during the pyrolysis and recovered.

The biomass-containing fuel may contain a different component in addition to the char produced by pyrolysis of plant biomass, the dispersant, and water. Preferably, the different component may be contained in a proportion of 20% by mass or less based on 100% by mass of the biomass-containing fuel, but the proportion is not limited thereto. The proportion is more preferably 15% by mass or less, still more preferably 10% by mass or less.

The biomass-containing fuel preferably has a viscosity of 1,000 mPa·s or less. This allows the biomass-containing fuel to have higher fluidity, better handleability, and better transportability. The viscosity of the biomass-containing fuel is more preferably 800 mPa·s or less, still more preferably 600 mPa·s or less, particularly preferably 500 mPa·s or less.

The viscosity of the biomass-containing fuel can be measured by the method described in the EXAMPLES.

The biomass-containing fuel may have thixotropy or rheopexy, and preferably has thixotropic properties.

The biomass-containing fuel preferably has a theoretical calorific value of 2,000 to 8,000 kcal/kg. The theoretical calorific value is more preferably 2,500 to 7,000 kcal/kg, still more preferably 3,000 to 6,000 kcal/kg.

The theoretical calorific value can be calculated as follows. Calorific value of biomass-containing fuel = Calorific value of char produced by pyrolysis of plant biomass (actual value) × Proportion of char produced by pyrolysis of plant biomass

The calorific value of the fuel can also be measured in accordance with JIS K 2279:2003.

The following further describes essential components and optional components contained in the biomass-containing fuel of the present invention.

### <Char produced by pyrolysis of plant biomass>

The char produced by pyrolysis of plant biomass is not limited as long as it is obtained by carbonizing plant biomass by pyrolysis.

The plant biomass is not limited as long as it is an organic matter derived from a plant. Examples of the plant include woody plants and herbaceous plants.

Examples of woody plants include conifers such as cedar, fir, Japanese cypress, hiba arborvitae, pine, ginkgo, Japanese torreya, and Japanese yew, and broad-leaved trees such as eucalyptus, acacia, birch, beech, oak, katsura tree, sawtooth oak, cherry, zelkova, maple, chestnut, evergreen oak, paulownia, poplar, teak, and mahogany. Of these, cedar and acacia are preferred.

Examples of herbaceous plants include rice (straw, husk), wheat (straw, husk), buckwheat (straw, husk), sugarcane (bagasse), erianthus, corn, rapeseed, soybean, palm, reed, bamboo grass, bamboo, and sugar beet. Of these, sugarcane (bagasse) is preferred.

The plants in the plant biomass are preferably woody plants, since woody plants have a low ash content.

The char produced by pyrolysis of plant biomass preferably has an ash content of 15% by mass or less. The ash content is more preferably 10% by mass or less, still more preferably 3% by mass or less.

The ash content can be measured, for example, in accordance with JIS M 8812:2004.

The char produced by pyrolysis of plant biomass preferably has a nitrogen content of 1.0% by mass or less. The nitrogen content is more preferably 0.7% by mass or less, still more preferably 0.5% by mass or less.

The nitrogen content can be measured, for example, in accordance with JIS M 8813:2004.

The char produced by pyrolysis of plant biomass preferably has a sulfur content of 0.5% by mass or less. The sulfur content is more preferably 0.1% by mass or less, still more preferably 0.05% by mass or less.

The sulfur content can be measured, for example, in accordance with JIS M 8813:2004.

Preferably, the char produced by pyrolysis of plant biomass includes particles, with 95% or more of the particles having a particle size of 100 µm or less. Plant tissue has a honeycomb structure, and the char has almost the same shape as the honeycomb structure. Such a char when pulverized has a broken honeycomb structure. The complex structure thereof has a significant effect on the fluidity of the fuel when such a char is dispersed therein. On the other hand, when the char includes particles, with 95% or more of the particles having a particle size of 100 µm or less, the fuel is not affected by the complex structure of plant tissue. Thus, the fluidity of the fuel when the char is dispersed therein is more improved. This allows the biomass-containing fuel of the present invention to have better handleability and better transportability.

In the char produced by pyrolysis of plant biomass, more preferably, 95% or more of the particles have a particle size of 50 µm or less, and still more preferably, 95% or more of the particles have a particle size of 30 µm or less.

The particle size of the char produced by pyrolysis of plant biomass and the proportion of the target particles can be measured by the method described in the EXAMPLES.

The char produced by pyrolysis of plant biomass preferably has an average particle size of 0.1 µm or more and 20 µm or less. When the average particle size is 20 µm or less, the fluidity of the fuel when the char is dispersed therein is improved. When it is 0.1 µm or more, an increase in the viscosity due to an increase in the specific surface area of the char can be sufficiently prevented or reduced.

The average particle size is more preferably 0.5 to 15 µm, still more preferably 1 to 10 µm, further more preferably 1 to 9 µm, still further more preferably 1 to 8 µm, particularly preferably 1 to 6 µm, particularly more preferably 2.5 to 6 µm.

The average particle size of the char produced by pyrolysis of plant biomass can be measured by the method described in the EXAMPLES.

The char produced by pyrolysis of plant biomass can be obtained by pyrolysing raw material plant biomass. The char thus obtained is in a semi-carbonized state and thus can be finely pulverized. The char produced by pyrolysis of plant biomass is preferably produced by carbonizing plant biomass by pyrolysis.

The temperature of the pyrolysis is preferably, but not limited to, 250°C to 550°C. When the temperature of the pyrolysis is 250°C or higher, carbonization proceeds efficiently and excellent productivity is achieved. When the temperature of the pyrolysis is 550°C or lower, the yield of the char further increases. When the temperature of the pyrolysis is within the above range, volatile components having molecular weights falling within suitable ranges can be obtained in the carbonizing of plant biomass. Such volatile components can be suitably used as fuels, etc.

The temperature of the pyrolysis is more preferably 250°C to 500°C, still more preferably 260°C to 450°C, further more preferably 300°C to 430°C, particularly preferably 350°C to 400°C.

Preferred conditions for the carbonizing of plant biomass by pyrolysis are described later in the description of the method for producing a biomass-containing fuel.

### <Dispersant>

The dispersant contained in the biomass-containing fuel of the present invention is not limited as long as it can disperse the char produced by pyrolysis of plant biomass into water. Examples thereof include (i) various sulfonic acid dispersants having a sulfonic acid group in the molecule including: polyalkylarylsulfonate dispersants such as naphthalenesulfonic acid-formaldehyde condensates; melamine formalin resin sulfonate dispersants such as melamine sulfonic acid-formaldehyde condensates; aromatic aminosulfonate dispersants such as aminoarylsulfonic acid-phenol-formaldehyde condensates; lignin sulfonate dispersants such as lignin sulfonates and modified lignin sulfonates; polystyrene sulfonate dispersants; and nonylphenylol sulfonate, (ii) various polycarboxylic acid dispersants having a (poly)oxyalkylene group and a carboxy group in the molecule including: polyalkylene glycol mono(meth)acrylic acid ester monomers, (meth)acrylic acid monomers, and copolymers obtained from any monomers copolymerizable with these monomers, as described in JP 59-18338 B and JP H07-223852 A; and copolymers obtained from any of unsaturated (poly)alkylene glycol ether monomers, maleic acid monomers, and (meth)acrylic acid monomers, as described in JP H10-236858 A, JP 2001-220417 A, JP 2002-121055 A, and JP 2002-121056 A, (iii) polyvinylpyrrolidone, (iv) polyacrylic acid, (v) various phosphoric acid dispersants including: copolymers having a (poly)oxyalkylene group and a phosphoric acid ester group in the molecule, such as copolymers obtained from any of (alkoxy)polyalkylene glycol mono(meth)acrylates, phosphoric acid monoester monomers, and phosphoric acid diester monomers, as described in JP 2006-52381 A; polycondensation products including a monomer having a (poly)oxyalkylene group and an aromatic ring group and/or a heterocyclic aromatic group, a monomer having a phosphoric acid (salt) group and/or a phosphoric acid ester group and an aromatic ring group and/or a heterocyclic aromatic group, and an aldehyde compound, as described in JP 2008-517080 T; and dispersants having an aromatic triazine structural unit, a polyalkylene glycol structural unit, and a phosphoric acid ester structural unit, as described in JP 2015-508384 T, (vi) anionic surfactants such as alkyl sulfate ester salts, higher alcohol sulfate ester salts, nonionic ether sulfate ester salts, olefin sulfate ester salts, polyoxyethylene alkyl (alkylphenol) sulfate ester salts, alkyl aryl sulfonates, dibasic acid ester sulfonates, alkyl benzene sulfonates, alkyl naphthalene sulfonates, dialkyl sulfosuccinates, alkyl phosphate ester salts, and acyl sarcosinates, (vii) cationic surfactants such as alkylamine salts, quaternary amine salts, and alkylpyridinium sulfates, (viii) nonionic surfactants such as polyoxyalkyl ethers, polyoxyethylene alkylphenol ethers, oxyethylene-oxypropylene block polymers, polyoxyethylene alkylamines, sorbitan fatty acid esters, polyoxyethylene sorbitan fatty acid esters, alkyltrimethylammonium chlorides, alkyldimethylbenzylammonium chlorides, polyoxyethylene fatty acid esters, aliphatic alcohol polyoxyethylene ethers, polyhydric alcohol fatty acid esters, and ethanolamides of fatty acids, and (ix) amphoteric surfactants such as alkylbetaines.

The dispersant is preferably a polycarboxylic acid dispersant. It more preferably contains a copolymer having a structural unit (a) derived from a polyalkylene glycol monomer (A) and a structural unit (b) derived from an unsaturated carboxylic acid monomer (B), with the polyalkylene glycol monomer (A) being represented by the following formula (1): 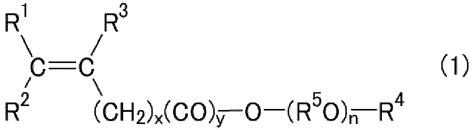 wherein R¹, R², and R³ are the same as or different from each other and each represent a hydrogen atom or a methyl group; R⁴ is a hydrogen atom or a C1-C30 hydrocarbon group; (R⁵O)s are the same as or different from each other and each represent a C2-C18 oxyalkylene group; n represents the average number of moles of oxyalkylene groups added and is a number from 1 to 300; x is an integer of 0 to 4; and y represents 0 or 1.

In the formula (1), R⁴ represents a hydrogen atom or a C1-C30 hydrocarbon group. R⁴ is preferably a C1-C20 hydrocarbon group or a hydrogen atom, more preferably a hydrogen atom or a C1-C18 hydrocarbon group, still more preferably a hydrogen atom or a C1-C12 hydrocarbon group, particularly preferably a hydrogen atom or a C1-C8 hydrocarbon group, most preferably a hydrogen atom or a C1-C3 hydrocarbon group.

Examples of the hydrocarbon group include linear or branched alkyl groups such as a methyl group, an ethyl group, a propyl group, an isopropyl group, an n-butyl group, an isobutyl group, a sec-butyl group, a tert-butyl group, a pentyl group, an isopentyl group, a neopentyl group, a 3-pentyl group, a hexyl group, a heptyl group, an octyl group, a nonyl group, a decyl group, an undecyl group, a dodecyl group, an isooctyl group, a 2,3,5-trimethylhexyl group, a 4-ethyl-5-methyloctyl group, a 2-ethylhexyl group, a tetradecyl group, an octadecyl group, and an icosyl group; and aromatic hydrocarbon groups such as a phenyl group, a methylphenyl group, an ethylphenyl group, a naphthyl group, a benzyl group, a 1-phenylethyl group, a 2-phenylethyl group, a 3-phenylpropyl group, a 4-phenylbutyl group, a styryl group (Ph-CH=C- group), a cinnamyl group (Ph-CH=CHCH₂- group), a 1-benzocyclobutenyl group, and a 1,2,3,4-tetrahydronaphthyl group.

In the formula (1), n is preferably 1 to 100, more preferably 1 to 80, still more preferably 1 to 50.

In the formula (1), R⁵Os "are the same as or different from each other" and each represent a C2-C18 oxyalkylene group. This means that n oxyalkylene groups for R⁵Os present in the polyalkylene glycol may all be the same as or different from each other.

The number of carbon atoms of the oxyalkylene group is preferably 2 to 18. It is more preferably 2 to 12, still more preferably 2 to 8, particularly preferably 2 to 4.

In the formula (1), the oxyalkylene group for R⁵O is an alkylene oxide adduct. Examples of the alkylene oxide include C2-C8 alkylene oxides such as ethylene oxide, propylene oxide, butylene oxide, isobutylene oxide, 1-butene oxide, 2-butene oxide, and styrene oxide. C2-C4 alkylene oxides such as ethylene oxide, propylene oxide, and butylene oxide are more preferred.

The unsaturated monocarboxylic acid monomer (B) is not limited as long as it is a monomer having an unsaturated group and a group capable of forming a carbanion in the molecule. Examples thereof include (meth)acrylic acid, crotonic acid, isocrotonic acid, tiglic acid, 3-methylcrotonic acid, 2-methyl-2-pentenoic acid, α-hydroxyacrylic acid, maleic acid, itaconic acid, mesaconic acid, citraconic acid, fumaric acid, and salts thereof. (Meth)acrylic acid, maleic acid, and salts thereof are preferred.

The proportion of the structural unit (a) in the copolymer is preferably, but not limited to, 1 to 95% by mass based on 100% by mass of all structural units. The proportion is more preferably 5 to 70% by mass, still more preferably 7 to 60% by mass, particularly preferably 10 to 50% by mass.

The proportion of the structural unit (b) in the copolymer is preferably, but not limited to, 5 to 99% by mass based on 100% by mass of all structural units. The proportion is more preferably is 30 to 95% by mass, still more preferably 40 to 93% by mass, particularly preferably 50 to 90% by mass.

The dispersant preferably has a weight average molecular weight of 1,000 to 1,000,000, but the weight average molecular weight is not limited thereto.

When the weight average molecular weight is 1,000 or more, the dispersant can more sufficiently prevent or reduce foaming during dispersion. The weight average molecular weight is more preferably 2,000 to 500,000, still more preferably 3,000 to 100,000.

When the dispersant is a polycarboxylic acid dispersant, it preferably has a weight-average molecular weight of 3,000 to 500,000. The weight-average molecular weight is more preferably 4,000 to 300,000, still more preferably 5,000 to 100,000, further more preferably 10,000 to 80,000, still further more preferably 20,000 to 60,000.

The weight-average molecular weight of the dispersant can be measured by the method described in the EXAMPLES.

### <Different component>

The biomass-containing fuel of the present invention may contain a different component in addition to the char produced by pyrolysis of plant biomass, the dispersant, and water.

Non-limiting examples of the different component include stabilizers, thickeners, viscosity reducers, igniters, organic solvents, water retention agents, and lubricants.

Non-limiting examples of the stabilizers include ammonia, sodium hydroxide, and amines. Of these, ammonia is preferred.

Non-limiting examples of the thickeners include polysaccharides, polyacrylamides, polyalkylene oxides, polyacrylic acids and salts thereof, and polyvinyl alcohol.

Non-limiting examples of the viscosity reducers include glycol monoethers, glycol diethers, phenyl glycol ethers, and benzyl glycols.

Non-limiting examples of the igniters include heavy oil, light oil, and bioalcohol. Of these, biobutanol, biopropanol, and bioethanol are preferred.

Non-limiting examples of the organic solvents include C1-C8 alcohols such as methanol, ethanol, 1-propanol, 2-propanol, 1-butanol, and phenoxyethanol; glycols such as ethylene glycol, propylene glycol, butylene glycol, and hexylene glycol; acetone; and ethyl acetate.

### [Method for producing biomass-containing fuel]

The biomass-containing fuel of the present invention may be produced by any method, and is preferably produced by a method including carbonizing plant biomass by pyrolysis to produce a char, pulverizing the char obtained in the carbonizing, and mixing the pulverized material obtained in the pulverizing, a dispersant, and water. The present invention also encompasses a method for producing a biomass-containing fuel, the method including carbonizing plant biomass by pyrolysis to produce a char, pulverizing the char obtained in the carbonizing, and mixing the pulverized material obtained in the pulverizing, a dispersant, and water.

The carbonizing is not limited as long as the plant biomass is carbonized by pyrolysis. The temperature of the pyrolysis is preferably 250°C to 550°C. The temperature is more preferably 250°C to 500°C, still more preferably 260°C to 450°C, further more preferably 300°C to 430°C, particularly preferably 350°C to 400°C.

The system in the carbonizing preferably has a pressure of 0.1 to 100 atm, but the pressure is not limited thereto. The pressure is more preferably 0.5 to 10 atm, still more preferably 1 to 5 atm, particularly preferably 1 to 3 atm.

The system in the carbonizing preferably has an oxygen concentration of 0% to 5%, but the oxygen concentration is not limited thereto. The oxygen concentration is more preferably 0% to 3%, still more preferably 0% to 1%.

The pyrolysis in the carbonizing is preferably performed for a duration of three minutes to three hours, but the duration is not limited thereto. The duration is more preferably five minutes to one hour.

The carbonizing may be performed by any equipment. Examples thereof include horizontal moving bed reactors such as a mesh belt type continuous furnace, a tunnel kiln, and a rotary kiln; and twin-screw extruders.

The pulverizing is not limited as long as it pulverizes the char obtained in the carbonizing, and may be wet pulverization or dry pulverization.

The pulverizing may be performed by any pulverizer. Examples thereof include a hammer mill, a ball mill, a tube mill, a rod mill, a jet mill, and a bead mill.

The mixing is not limited as long as the pulverized material obtained in the pulverizing is mixed with a dispersant and water. The mixing preferably includes dispersing the pulverized material into water by stirring or with ultrasonic waves.

In the mixing, a stirrer such as a disperser, a homogenizer, a line mixer, or a static mixer, or an ultrasonic disperser is preferably used. The dispersant and water may be added to a grinding mill in the latter half of the pulverizing, so that both wet pulverization and mixing may be performed.

The mixing may be performed in any atmosphere such as an air atmosphere or an inert gas atmosphere. Preferably, the mixing is performed while introducing an inert gas such as nitrogen.

The mixing is preferably performed in an explosion-proof facility.

The method for producing a biomass-containing fuel of the present invention preferably includes drying the raw material plant biomass before the carbonizing.

The drying is not limited as long as it dries the raw material plant biomass. Preferably, the drying is performed until the moisture content of the raw material plant biomass is reduced to 25% or less.

The method for producing a biomass-containing fuel of the present invention preferably includes crushing the raw material plant biomass into pieces of 50 mm or less before the carbonizing.

The method for producing a biomass-containing fuel of the present invention may include, after the mixing, filtering the composition obtained in the mixing. For the filtering, a 50- to 300-mesh wire screen is preferably used.

### EXAMPLES

The present invention is described in more detail below with reference to examples, but the present invention is not limited to these examples. Unless otherwise specified, "%" means "% by mass."

### <Method of measuring particle size>

A pulverized char was added to a 10% aqueous solution of naphthalenesulfonic acid-formalin condensate to a concentration of 10%. They were subjected to dispersion for 15 minutes using an ultrasonic disperser. The particle size distribution of the resulting dispersion was determined using a laser diffraction/scattering particle size distribution analyzer (LA-950V2, available from HORIBA, Ltd.).

### <Method of measuring viscosity>

Biomass-containing fuels obtained in the examples and the comparative example were measured for a viscosity at 25°C and 5 rpm using an E-type viscometer (Toki Sangyo Co., Ltd., TV-100, rotor #1).

### <Method for measuring weight average molecular weight of dispersant>

The measurement was performed by gel permeation chromatography (GPC) using polystyrene standards.

### <Example 1>

Cedar was crushed into chips of 15 mm or less, and the chips were dried to a moisture content of 15% or less. The chips were pyrolyzed in a rotary kiln having a barrel length of 3.5 m, an inclination angle of 4 degrees, and an internal baffle plate installed therein at an internal temperature of 400°C, 1.5 revolutions per minute, an internal temperature of 400°C, and atmospheric pressure. The operation was adjusted so that it took about 30 minutes from charging to discharging, and a cedar char was obtained. The obtained char was coarsely ground using a commercial hammer mill (RT-34, available from LaboNext), and then the coarsely ground char was pulverized using a commercial fine pulverizer to obtain pulverized chars with an average particle size of 2.36 µm, 5.36 µm, or 7.28 µm.

An amount of 1 g of the pulverized cedar char with an average particle size of 5.36 µm was weighed into a sample tube. To the sample tube was added 0.67 g of an aqueous solution of any of various dispersants diluted to 1.5%, so that the concentration of the dispersant was 1% relative to the char. Further, 0.33 g of water was added so that the dispersion concentration of the char was 50%. The sample tube was sealed. Dispersion was performed using an ultrasonic disperser for 15 minutes. Thereafter, the contents were stirred with a spatula to loosen them, and then dispersion was performed using the ultrasonic disperser for another 15 minutes to obtain a biomass-containing composition (biomass-containing fuel). The viscosity of the resulting composition was measured, and the results are shown in Table 1.

**[Table 1]**

| | | Viscosity (mPa·s) at dispersion concentration of 50% |
|---|---|---|
| Dispersant (1) | Naphthalenesulfonic acid-formalin condensate | 51.3 |
| Dispersant (2) | Polyvinylpyrrolidone | 37.2 |
| Dispersant (3) | Polycarboxylic acid dispersant (1) | 28.3 |
| Dispersant (4) | Polycarboxylic acid dispersant (2) | 60.3 |
| Dispersant (5) | Polycarboxylic acid dispersant (3) | 27.6 |
| Dispersant (6) | Polycarboxylic acid dispersant (4) | 27.4 |

The dispersants used in Example 1 are described in detail below.

### (Dispersant (1): Naphthalenesulfonic acid-formalin condensate)

The naphthalenesulfonic acid-formalin condensate used was a product commonly used as a cement water reducing agent (weight average molecular weight: about 1200).

### (Dispersant (2): Polyvinylpyrrolidone)

The polyvinylpyrrolidone used had a K value (value of viscosity characteristics) of 30.

### (Dispersant (3): Polycarboxylic acid dispersant (1))

A copolymer of methacrylic acid (MAA) and methoxypolyethylene glycol methacrylate (average number of moles of ethylene oxide added: 25) (PGM25E) (MAA:PGM25E = 80:20 (mass ratio), weight average molecular weight: 23,000) was used.

### (Dispersant (4): Polycarboxylic acid dispersant (2))

A copolymer of acrylic acid (AA), methacrylic acid (MAA), and phenoxy polyethylene glycol methacrylate (average number of moles of ethylene oxide added: 20) (PGF20E) (AA:MAA:PGF20E = 42:50:8 (mass ratio), weight average molecular weight: 45,000) was used.

### (Dispersant (5): Polycarboxylic acid dispersant (3))

A copolymer of acrylic acid (AA) and methoxypolyethylene glycol methacrylate (average number of moles of ethylene oxide added: 23) (PGM23E) (AA:PGM23E = 35:65 (mass ratio), weight average molecular weight: 52,000) was used.

### (Dispersant (6): Polycarboxylic acid dispersant (4))

A copolymer of acrylic acid (AA), methacrylic acid (MAA), and methoxypolyethylene glycol methacrylate (average number of moles of ethylene oxide added: 25) (PGM25E) (AA:MAA:PGM25E = 86:1:13 (mass ratio), weight average molecular weight: 58,000) was used.

### <Comparative Example 1>

An amount of 1 g of the pulverized char having an average particle size of 5.36 µm obtained in Example 1 was weighed into a sample tube, and 1 g of water was added thereto to adjust the dispersion concentration to 1%. The sample tube was sealed. Dispersion was performed using an ultrasonic disperser for 15 minutes. Thereafter, the contents were stirred with a spatula to loosen them, and then dispersion was performed using the ultrasonic disperser for an additional 15 minutes to obtain a biomass-containing composition (biomass-containing fuel). However, the char in the composition did not disperse.

### <Example 2>

An amount of 1 g of any of the pulverized cedar chars having different average particle sizes obtained in Example 1 was weighed into a sample tube. To the sample tube was added an aqueous solution of the dispersant (5) used in Example 1 diluted to 1.5%, so that the concentration of the dispersant was 1% or 2% relative to the char. Further, water was added while adjusting the dispersion concentration of the char to the corresponding concentration shown in Tables 2 to 6. The sample tube was sealed. Dispersion was performed using an ultrasonic disperser for 15 minutes. Thereafter, the contents were stirred with a spatula to loosen them, and then dispersion was performed using the ultrasonic disperser for an additional 15 minutes to obtain a biomass-containing composition (biomass-containing fuel). The viscosity of the composition obtained was measured, and the results are shown in Tables 2 to 6.

**[Table 2]**

| Amount of dispersant added: 1%, average particle size: 5.36 µm | | | | | | |
|---|---|---|---|---|---|---|
| Dispersion concentration of char (%) | 45.0 | 50.0 | 52.0 | 55.0 | 56.0 | 56.0 |
| Viscosity of dispersion (mPa·s) | 15.0 | 31.7 | 57.8 | 83.3 | 99.1 | 202.4 |

**[Table 3]**

| Amount of dispersant added: 1%, average particle size: 7.28 µm | | | |
|---|---|---|---|
| Dispersion concentration of char (%) | 45.0 | 50.0 | 52.0 |
| Viscosity of dispersion (mPa·s) | 19.2 | 33.2 | 71.2 |

**[Table 4]**

| Amount of dispersant added: 2%, average particle size: 2.36 µm | | | | | | | |
|---|---|---|---|---|---|---|---|
| Dispersion concentration of char (%) | 45.0 | 50.0 | 52.0 | 53.0 | 54.0 | 55.0 | 56.0 |
| Viscosity of dispersion (mPa·s) | 22.1 | 50.8 | 80.5 | 98.1 | 163.1 | 206.1 | 331.1 |

**[Table 5]**

| Amount of dispersant added: 2%, average particle size: 5.36 µm | | | | | | |
|---|---|---|---|---|---|---|
| Dispersion concentration of char (%) | 45.0 | 50.0 | 52.0 | 53.0 | 54.0 | 55.0 |
| Viscosity of dispersion (mPa·s) | 19.1 | 41.2 | 57.7 | 79.9 | 107.3 | 121.2 |

**[Table 6]**

| Amount of dispersant added: 2%, average particle size: 7.28 µm | | | | | |
|---|---|---|---|---|---|
| Dispersion concentration of char (%) | 45.0 | 50.0 | 52.0 | 53.0 | 54.0 |
| Viscosity of dispersion (mPa·s) | 22.3 | 54.3 | 106.9 | 147.0 | 188.0 |

### <Calculation of theoretical calorific value>

The theoretical calorific values of the compositions each having a dispersion concentration of the pulverized char of 55% were calculated as follows and were found to be about 3,300 to 5,000 kcal/kg. Calorific value of biomass-containing fuel = Calorific value of char produced by pyrolysis of plant biomass (actual value) × Proportion of char produced by pyrolysis of plant biomass

The results are within the combustible range of coal slurry fuel and demonstrate that the compositions each having a dispersion concentration of the pulverized char of 55% can be suitably used as a fuel.

## Claims

1. A biomass-containing fuel comprising:
a char produced by pyrolysis of plant biomass;
a dispersant; and
water,
the char produced by pyrolysis of plant biomass being contained in a proportion of 40% by mass or more based on 100% by mass of the biomass-containing fuel.

2. The biomass-containing fuel according to claim 1,
wherein the char produced by pyrolysis of plant biomass is obtained by pyrolysis at a temperature of 250°C to 450°C.

3. The biomass-containing fuel according to claim 1 or 2,
wherein the char produced by pyrolysis of plant biomass comprises particles, with 95% or more of the particles having a particle size of 50 µm or less.

4. The biomass-containing fuel according to any one of claims 1 to 3,
wherein the char produced by pyrolysis of plant biomass has an average particle size of 0.1 µm or more and 20 µm or less.

5. The biomass-containing fuel according to any one of claims 1 to 4,
wherein the biomass-containing fuel has a viscosity of 1,000 mPa·s or less.

6. A method for producing a biomass-containing fuel, the method comprising:
carbonizing plant biomass by pyrolysis to produce a char;
pulverizing the char obtained in the pyrolysis; and
mixing the pulverized material obtained in the pulverizing, a dispersant, and water.
